# EUROPÄISCHE PATENTSCHRIFT

(11) **EP 1 169 274 B1**
(45) Veröffentlichungstag und Bekanntmachung des Hinweises auf die Patenterteilung: **09.04.2003**
(21) Anmeldenummer: 00910659.2
(22) Anmeldetag: 09.02.2000
(51) Int. Cl.: C03C 3/087, C03C 3/093, C03C 3/095, C03C 4/20, C03C 13/00

(54) **HOCHZIRCONIUMOXIDHALTIGES GLAS UND DESSEN VERWENDUNGEN**
GLASS WITH HIGH PROPORTION OF ZIRCONIUM-OXIDE AND ITS USES
VERRE A HAUTE TENEUR EN OXYDE DE ZIRCONIUM ET SON UTILISATION

(30) Priorität: 15.02.1999 DE 19906240
(43) Veröffentlichungstag der Anmeldung: 09.01.2002
(73) Patentinhaber: Schott Glas, 55122 Mainz (DE); CARL-ZEISS-STIFTUNG trading as Schott Glaswerke, 55122 Mainz (DE)
(72) Erfinder: NAUMANN, Karin, D-55270 Ober-Olm (DE); GREULICH-HICKMANN, Norbert, D-55127 Mainz (DE); KOLBERG, Uwe, D-65252 Mainz-Kastel (DE); KIEFER, Werner, D-55126 Mainz (DE)
(86) Internationale Anmeldenummer: EP0001049
(87) Internationale Veröffentlichungsnummer: WO00048955

(56) Entgegenhaltungen:
- GB-A- 1 191 162
- US-A- 4 030 935
- US-A- 4 065 317

## Beschreibung

Die Erfindung betrifft ein hochzirconiumoxidhaltiges Glas sowie dessen Verwendungen.

Hochzirconiumoxidhaltige Gläser sind vor allem im Zusammenhang mit alkaliresistenten Glasfasern zur Betonverstärkung beschrieben.
Im Vergleich zu E-Glas, einem weitgehend alkalifreien Aluminoborosilicatglas, weisen Fasern aus bekannten ZrO₂ - haltigen Gläsern zwar eine höhere Alkalibeständigkeit auf, jedoch ist insbesondere ihre Beständigkeit im Zement über lange Zeiträume hinweg noch unzureichend. Die Alkalibeständigkeit von betonverstärkenden Fasern ist von Bedeutung und steht daher bei der Glasentwicklung meist im Vordergrund, weil das Abbinden des Zementes unter stark alkalischen Bedingungen (pH-Werte bis ca. 12,5) erfolgt.
Offensichtlich ist jedoch für den Langzeiteinsatz als Verstärkungsmittel in Beton neben der Alkalibeständigkeit auch die sonstige chemische Beständigkeit, insbesondere die hydrolytische Beständigkeit, von Bedeutung, da sie die Langzeitbeständigkeit verbessert.

Gläser, die sowohl gegenüber Wasser, Säuren und Laugen eine hohe Resistenz zeigen, sind für die verschiedensten Anwendungen interessant, z B. für Pharmaverpackungen oder für Sichtkontrollfenster in Prozeßbehältern, insbesondere, wenn sie zusätzlich eine hohe Temperaturbelastbarkeit aufweisen.

Ein Merkmal für eine hohe Temperaturbelastbarkeit ist eine hohe Transformationstemperatur T_{g}. Bei Gläsern mit hohem T_{g} ist erfahrungsgemäß die sogenannte "Compaction" (Schrumpf oder "Shrinkage") gering. Es handelt sich hierbei um den Schrumpf von Glasteilen bei Temperaturbehandlungen unterhalb von T_{g}, eine Eigenschaft, die selbst nur mit großem experimentellen Aufwand hinreichend genau bestimmt werden kann und beispielsweise für Anwendungen, bei denen sehr strenge Maßstäbe an die Formtreue der Glasteile gelegt werden, von Bedeutung ist, so z. B. für Anwendungen in der Displaytechnik.

Für optische Anwendungen sind zur Korrektur von Abbildungsfehlern Gläser mit hoher negativer anomaler Teildispersion im blauen Spektralbereich (Δ P_{g,F}) höchst interessant. Nachteilig an den bisher bekannten Gläsern dieser Serie ist, daß sie entweder hohe Mengen an PbO aufweisen, was aus Umweltgesichtspunkten unerwünscht ist, und eine schlechte chemische Beständigkeit aufweisen oder daß für bleifreie Substitutionsprodukte große Mengen der sehr teuren Rohstoffe Nb₂O₅ und insbesondere Ta₂O₅ verwendet werden müssen, was die wirtschaftliche Fertigung stark erschwert. Solche bleifreien Gläser sind aus DE-OS 27 29 706 bekannt.

In der Patentliteratur sind auch bereits die verschiedensten Schriften bekannt, die alkalibeständige Gläser mit hohen ZrO₂ -Gehalten beschreiben, welche jedoch noch Nachteile aufweisen.

Die britische Patentschrift GB 1 290 528 beschreibt Glaszusammensetzungen zur Herstellung von Glasfasern, die 13 bis 23 mol-% R₂O (0 - 2% Li₂O, Rest Na₂O) enthalten. Gläser mit einem so hohen Alkaligehalt, wie sie auch in der Glasfasermaterialien für Komponenten von Abgassystemen für Verbrennungsmotoren beschreibenden europäischen Patentschrift EP 0 446 064 B1 (13 - 18 Gew.% Na₂O + K₂O) vorkommen, zeigen eine schlechte hydrotytische Beständigkeit.

Dasselbe gilt für die Glasfasern gemäß DE 17 96 339 C3 auf der Grundlage eines Glases mit 11 Gew.-% Na₂O und 1 Gew.-% Li₂O sowie für die zu Fasern verarbeiteten Gläser der DE 40 32 460 A1 mit 10 - 15 Gew.-% Na₂O und 0,1 - 2 Gew.-% K₂O.

Die ebenfalls hochalkalihaltigen (10 - 25 Gew.-% R₂O) Glaszusammensetzungen aus der deutschen Offenlegungsschrift DE - OS 2 406 888 enthalten bis zu 20 Gew.-% an Oxiden der Seltenen Erden, beispielsweise Ceroxid oder auch natürlich vorkommende Mischungen dieser Oxide.

Seltenerdoxide, und zwar zusammen mit TiO₂ 0,5 - 16 Gew.-%, wobei der TiO₂ - Anteil höchstens 10 Gew.-% des Glases beträgt, sind auch in den Gläsern aus der deutschen Offenlegungsschrift DE 31 07 600 A1 enthalten. Sie enthalten weiterhin 0,1 - 1 Gew.-% Cr₂O₃. Wesentlich ist hierbei, daß das Chrom vorwiegend im dreiwertigem Zustand vorliegt.

Die deutsche Offenlegungsschrift DE - OS 26 14 395 beschreibt Al₂O₃-freie Gläser, die für ihre Alkalibeständigkeit 0,5 - 10 Gew.-% Cr₂O₃ + SnO₂ enthalten müssen, Komponenten, die folgende Nachteile aufweisen: Cr₂O₃ löst sich nur schwer im Glasfluß auf und auch bei Verwendung von Chromsalzen können Schwierigkeiten durch "Chromknoten" auftreten. SnO₂ ist ein guter Keimbildner und fördert daher die Kristallisation. Weiter benötigen die Gläser als Schmelzhilfsmittel 0,05 - 1 Gew.-% SO₃, was zu störender Schaum- und Gallebildung führen kann.

DE - OS 30 09 953 beschreibt Glasfasern, die neben ZrO₂ ThO₂ enthalten müssen. Diese Komponente ist zur Erzielung der Alkalibeständigkeit erforderlich. Aufgrund ihrer Radioaktivität ist es jedoch erstrebenswert, auf diese Komponente verzichten zu können.

Aus EP 0 500 325 A1 sind Glasfasern mit 5 - 18 mol-% TiO₂ bekannt. Ihre resultierende chemische Beständigkeit wird erkauft mit einer sehr hohen Kristallisationsanfälligkeit, was insbesondere hinsichtlich der Spinnbarkeit der Glasschmelze zu Fasern von Nachteil ist.

Die Patentschrift DD 293 105 A5 beschreibt ein Verfahren zur Herstellung von hochalkaliresistenten Glasfasern und daraus hergestellte Produkte, wobei die zu verspinnende Glasschmelze neben SiO₂, R₂O₃, ZrO₂, RO und R₂O (K₂O, Na₂O und/oder Li₂O) auch Fluorid enthält. Auf dieses Flußmittel kann nur verzichtet werden, wenn Li₂O vorhanden ist.

JP 62-13293 B2 beschreibt Glaszusammensetzungen für Kemglas und Mantel von Glasfasern, die wenigstens 5 Gew.-% B₂O₃ enthalten. ZrO₂ ist lediglich fakultative Komponente. Diese Gläser sollen zwar eine hohe Wasserbeständigkeit haben, was jedoch aufgrund der hohen B₂O₃ -Gehalte bei relativ hohen Alkaligehalten nicht über den gesamten Zusammensetzungsbereich gewahrt sein wird, da sich leicht wasserlösliche Alkaliboratphasen bilden können.

DE -OS 2 323 932 beschreibt Glasfasern, die sowohl P₂O₅ als auch B₂O₃ neben sehr hohen Gehalten an ZrO₂ (8 - 16 mol-%) enthalten. Der Alkaligehalt kann innerhalb eines weiten Bereiches variieren (1,5 - 25 mol-%). Ein derartig hoher ZrO₂-Gehalt hebt zwar die Alkaliresistenz stark an, P₂O₅ verringert sie jedoch wieder. Außerdem kann die hydrolytische Beständigkeit nicht über den gesamten Zusammensetzungsbereich hinweg ausreichend sein.

GB 2 232 988 A beschreibt ZrO₂ -haltige Glasfasern, die zur Verbesserung ihrer Alkalibeständigkeit mit einem thermoplastischen Harz überzogen sind. Aufgrund dieses zusätzlichen Verfahrensschrittes sind solche Fasern nur teuer und aufwendig herstellbar. Als Fasermaterial können Gläser aus dem System SiO₂ - ZrO₂ - R₂O mit recht großer Variationsbreite der Komponenten und mit weiteren lediglich fakultativen Komponenten verwendet werden, da aufgrund des Überzugs die entsprechenden Eigenschaften des Glases an Bedeutung verlieren.

DE - OS 29 27 445 beschreibt Glaszusammensetzungen mit hohen ZrO₂-Anteilen, nämlich 18 - 24 Gew.-%. Dadurch besitzen die Gläser zwar eine hohe Alkalibeständigkeit, jedoch wirkt sich ein hoher Gehalt negativ auf die Verarbeitbarkeit und die Entglasungsstabilität aus.

Dagegen beschreibt CZ 236 744 Glasfasern aus Mineralrohstoffen zur Zementverstärkung, die lediglich 5 bis 10 Gew.-% ZrO₂ enthatten, ein Gehalt, mit dem eine hohe Alkalibeständigkeit nur schwer ereichbar ist.

Es ist nun Aufgabe der Erfindung, ein Glas bereitzustellen, das nicht nur eine hohe Laugenbeständigkeit, sondern auch eine hohe hydrolytische Beständigkeit und eine gute Säurebeständigkeit aufweist, das thermisch belastbar und gut verarbeitbar ist.

Diese Aufgabe wird durch das im Hauptanspruch beschrieben hochzirconiumoxidhaltige Glas gelöst.

Das erfindungsgemäße Glas enthält 54 bis 72 Gew.-% SiO₂. Bei höheren Gehalten würde die Schmelzbarkeit verschlechtert, bei niedrigeren Gehalten würde die Glasbildung erschwert. Wenigstens 55 Gew.-% sind besonders bevorzugt.

Al₂O₃, in Anteilen von 0,5 bis 7 Gew.-%, besonders bevorzugt bis 6 Gew. -%, vorhanden, dient ebenfalls der Verbesserung der Glasbildung und trägt wesentlich zur Verbesserung der chemischen Beständigkeit bei. Zu hohe Gehalte würden jedoch, insbesondere bei ZrO₂ -reichen und R₂O-armen Zusammensetzungen, zu einer erhöhten Kristallisationsneigung führen. Mit steigendem Anteil an Al₂O₃ sinkt indirekt die ZrO₂-Löslichkeit; dem kann jedoch im durch die genannten Grenzen gegebenen Rahmen durch das Vorhandensein der Alkalioxide begegnet werden kann. Daher ist es bevorzugt, daß das Gewichtsverhältnis Al₂O₃ / Na₂O < 1,64 beträgt, was einem molaren Verhältnis Al₂O₃ / Na₂O < 1 entspricht. Es ist besonders bevorzugt, daß nicht nur das Verhältnis Al₂O₃ / Na₂O sondern auch das molare Verhältnis Al₂O₃ / R₂O < 1 beträgt.

Wesentlich für die hohe Alkalibeständigkeit ist der ZrO₂ - Gehalt des Glases. Er beträgt daher wenigstens > 10 Gew.-%. Der maximale Gehalt ist auf < 18 Gew.-% beschränkt, da ansonsten die Entglasungstendenz zu sehr ansteigt. Auftretende ZrO₂ -Kristalle würden zu Glasfehlern führen. Bevorzugt ist eine Beschränkung des Maximalgehaltes auf weniger als 12 Gew.-%.

Das oder die Alkalioxide (2 - < 10 Gew.-% Na₂O, bevorzugt 3 - < 10 Gew.-%, und 0 - 5 Gew.-% K₂O mit 2 - < 10 Gew.-% Na₂O + K₂O , bevorzugt 3 - < 10 Gew.-%) dienen der Verbesserung der Schmelzbarkeit und ermöglichen die hohen ZrO₂ - Gehalte, da sie die Löslichkeit des ZrO₂ im Glas erhöhen. Bei zu hohen Alkaligehalten würde jedoch vor allem die hydrolytische Beständigkeit und in geringerem Maße die Laugenbeständigkeit verschlechtert. Es ist bevorzugt, daß sowohl Na₂O als auch K₂O vorhanden sind.

Von den Erdalkalioxiden, die mit mehr als 5 Gew.-% und höchstens 24 Gew.-% im Glas vorhanden sind, liegt CaO mit 3 - 11 Gew.-%, bevorzugt 3 - 10 Gew.-% vor, während MgO mit 0 - 10 Gew.-%, SrO mit 0 - 8 Gew.-% und BaO mit 0 - 12 Gew.-%, bevorzugt 0 - 10 Gew.-%, fakultative Komponenten sind.

Die Erdalkalioxide verringern die Schmelzviskosität, drängen die Kristallisation zurück und tragen auch zur Verbesserung der Alkaliresistenz bei. Insbesondere BaO verringert die Kristallisationsneigung. Bei zu geringem Erdalkalioxidgehalt würde sich in den Gläsern die Schmelz- und Verarbeitbarkeit zu sehr verschlechtern, sie wären nicht mehr zu Fasern verarbeitbar, und auch die ZrO₂ - Löslichkeit wäre zu gering. Bei einem höheren als dem genannten Maximalgehalt würden die Gläser entmischen und es käme ebenfalls zur Kristallisation. Bevorzugt ist ein Gesamtgehalt an Erdalkalioxiden von höchstens 23 Gew.-%.

B₂O₃ ist fakultative Komponente und verbessert durch Verringerung der Viskosität die Schmelzbarkeit. Ihr Gehalt soll jedoch auf weniger als 5 Gew.-% beschränkt bleiben, da B₂O₃ die Alkalibeständigkeit und insbesondere die Säurebeständigkeit verschlechtert. Es ist bevorzugt, den B₂O₃ - Höchstgehalt auf 4 Gew.-% zu beschränken.

Das Glas kann weiter 0 - 4 Gew.-% TiO₂ sowie 0 - 6 Gew.-%, bevorzugt 0 - 5 Gew.-% La₂O₃ enthalten. Ein Zusatz von La₂O₃ verbessert die Schmelzbarkeit des Glases, es erweitert den Glasbildungsbereich und erhöht den Brechwert. La₂O₃ und TiO₂ tragen hauptsächlich zur Verbesserung der hydrolytischen und der Laugenbeständigkeit bei, wobei La₂O₃ effektiver ist als TiO₂. Zu hohe Gehalte von La₂O₃ und TiO₂ verringern die Säurebeständigkeit und führen zu Kristallisation.

Eine besonders bevorzugte Gruppe von erfindungsgemäßen Gläsern stellen die B₂O₃-freien Gläser des folgenden Zusammensetzungsbereiches (in Gew.-% auf Oxidbasis) dar: SiO₂ 58 - 71; Al₂O₃ 0,5 - <2,3; ZrO₂ >10 - <18; Na₂O 2 - 9 (vorzugsweise 2 - 8); K₂O 0 - 3, mit Na₂O + K₂O 2 - <10, CaO 3 - 11 (vorzugsweise 3 - 9); MgO 0 - 2,6, SrO 0-6; BaO 0 - 9, mit CaO + MgO + SrO + BaO > 5 - 24, La₂O₃ 0 - 1.

Diese Gläser weisen neben der allen erfindungsgemäßen Gläsern eigenen sehr hohen Laugen- und Hydrolytischen Beständigkeit auch eine sehr hohe Säurebeständigkeit auf. Sie gehören nicht nur der Laugenklasse 1 und der Hydrolytischen Klasse 1, sondern auch der Säureklasse 1 an.

Das Glas kann weiter jeweils bis zu 2 Gew.-%, vorzugsweise bis zu 1 Gew.-%, Fe₂O₃, MnO₂, CeO₂ enthalten, wobei auch die Summe dieser drei Komponenten nicht mehr als 2 Gew.-%, vorzugsweise nicht mehr als 1 Gew.-%, betragen soll. Bei diesen Verbindungen handelt es sich um übliche Verunreinigungen in natürlich vorkommenden Rohstoffen der Glasbestandteile. Insbesondere bei der Verwendung der erfindungsgemäßen Gläser zur Herstellung von Fasern für die Betonverstärkung sind preisgünstige Rohstoffe von Bedeutung. Bei der Verwendung der Gläser für optische Zwecke sind die Anforderungen an die Reinheit der Gläser und damit auch an die Reinheit der Rohstoffe i.a. deutlich höher. Hier liegt die genannte Summe und insbesondere der Fe₂O₃-Gehalt bevorzugt unter 0,005 Gew.-%.

Die Gläser können zur Läuterung übliche Läutermittel in üblichen Mengen, also beispielsweise Arsenoxid, Antimonoxid, Chloride z. B. als CaCl₂ oder BaCl₂, oder, wie bevorzugt, SnO₂ enthalten. Auf Fluorid wird vorzugsweise bei all diesen Gläsern, vor allem aber bei denen mit hohen ZrO₂-Gehalten (≥12 Gew.-%) verzichtet. Bei den hohen Schmelztemperaturen der ZrO₂-reichen Gläser wäre der Aufwand zur Vermeidung umweltschädlicher Emissionen sehr hoch.

### Beispiele:

Aus üblichen Rohstoffen wurden zwanzig Beispiele erfindungsgemäßer Gläser in Pt/Rh-Tiegeln geschmolzen und zu Blöcken gegossen. Außerdem wurden Fasern im Wiederziehverfahren gezogen.
In Tabelle 1 sind die Zusammensetzung (in Gew.-% auf Oxidbasis) der Gläser und ihre wesentlichen Eigenschaften angegeben. Dies sind der thermische Ausdehnungskoeffizient α_{20/300} [10⁻⁶/K], die Transformationstemperatur T_{g} [°C], die Verarbeitungstemperatur V_{A} [°C], die Dichte ρ [g/cm³], der Elastizitätsmodul E [GPa], die Temperatur, bei der das Glas einen spezifischen elektrischen Volumenwiderstand von 10⁸ Ω cm hat, T_{K100} [°C], sowie die hydrolytische Beständigkeit H nach DIN/ISO 719 [µg Na₂O/g], die Säurebeständigkeit S nach DIN 12116 [mg/dm²] und die Laugenbeständigkeit L nach ISO 675 (= DIN 52322) [mg/dm²]. Außerdem sind die optischen Daten Brechwert n_{d}, Abbezahl ν_{d} und die Anomalie der Teildispersion im blauen Bereich des Spektrums Δ P_{g, F} angegeben. Läutermittel sind in der Tabelle 1 nicht angegeben, die Gehalte entsprechen dem jeweiligen Rest zu 100 %.

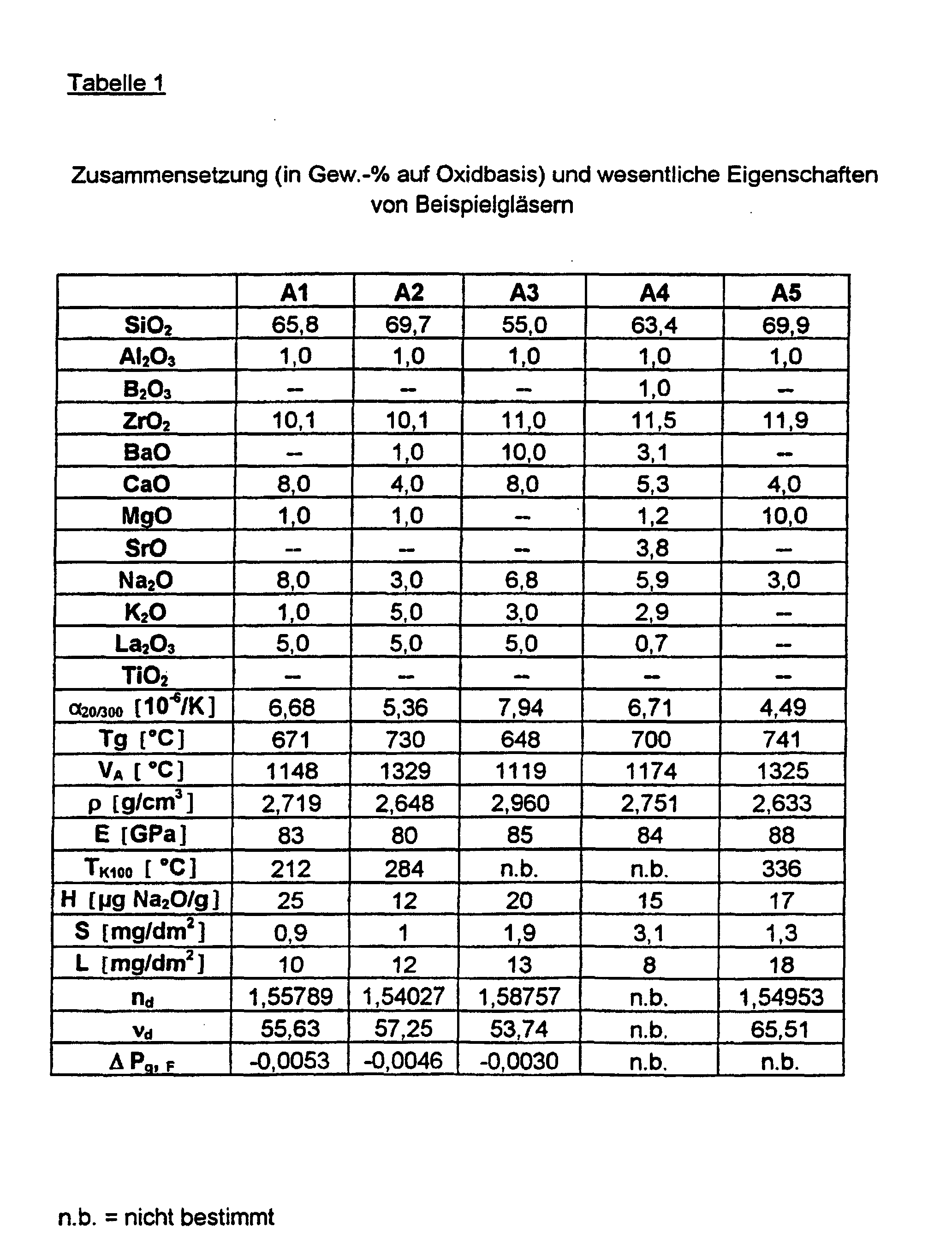

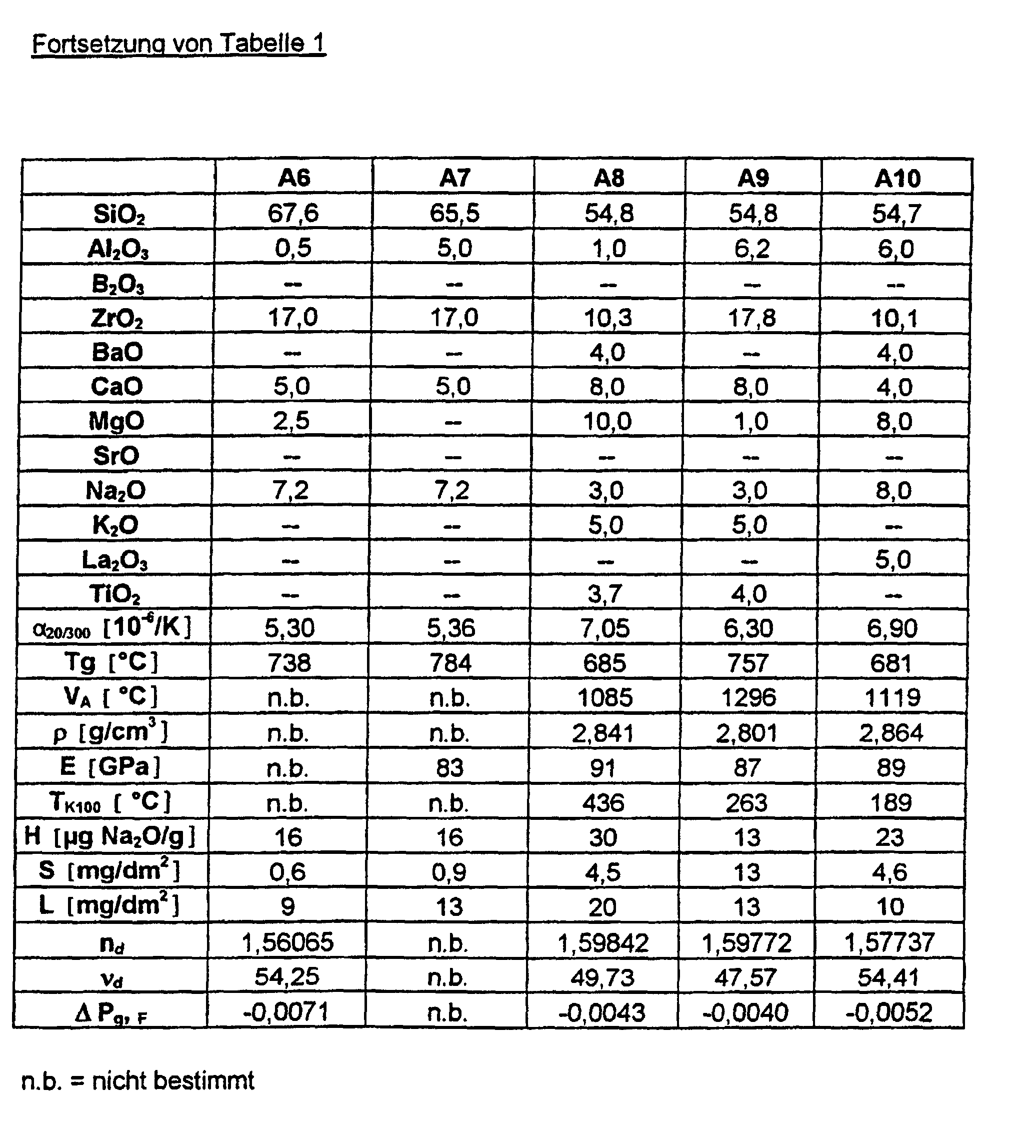

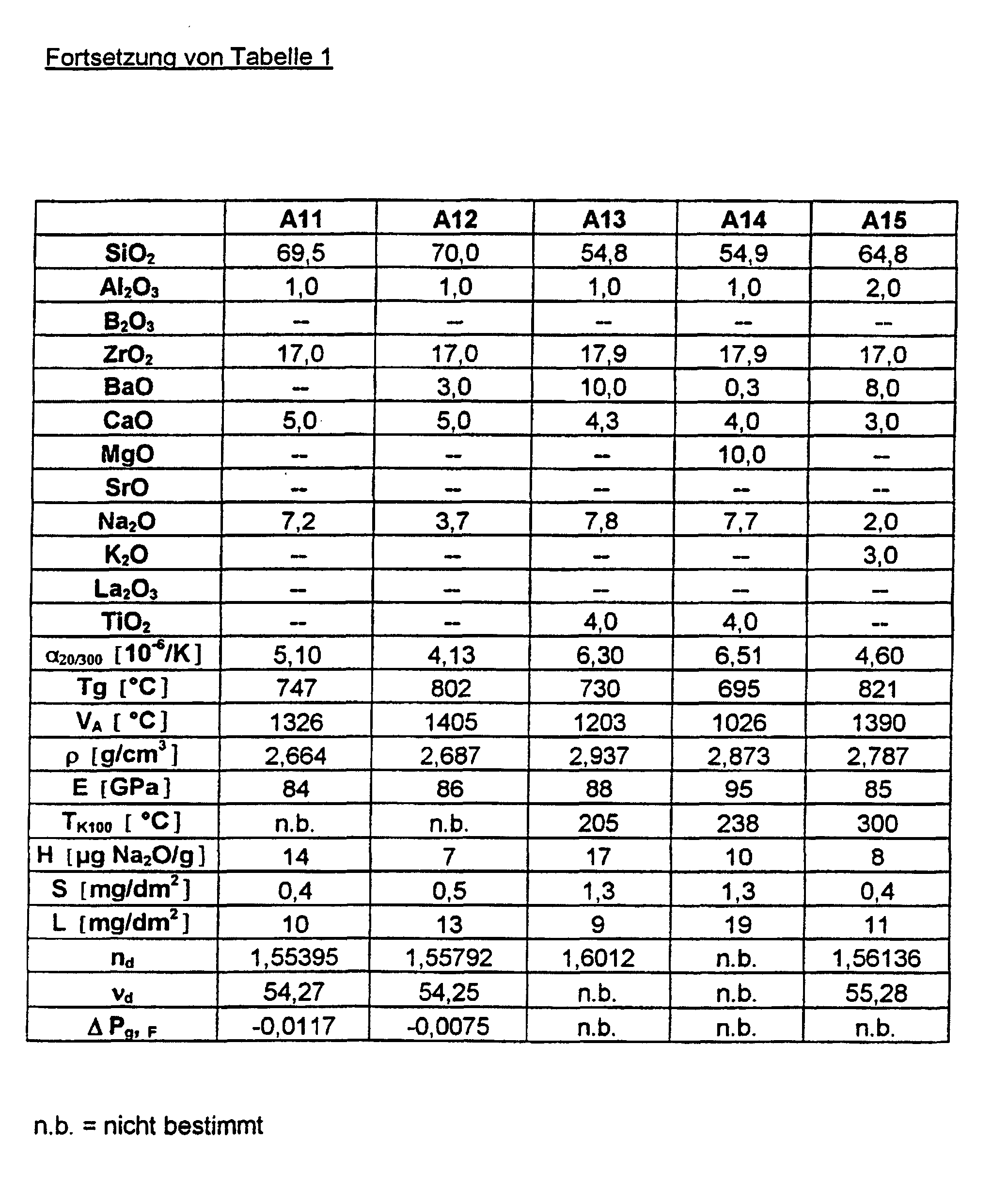

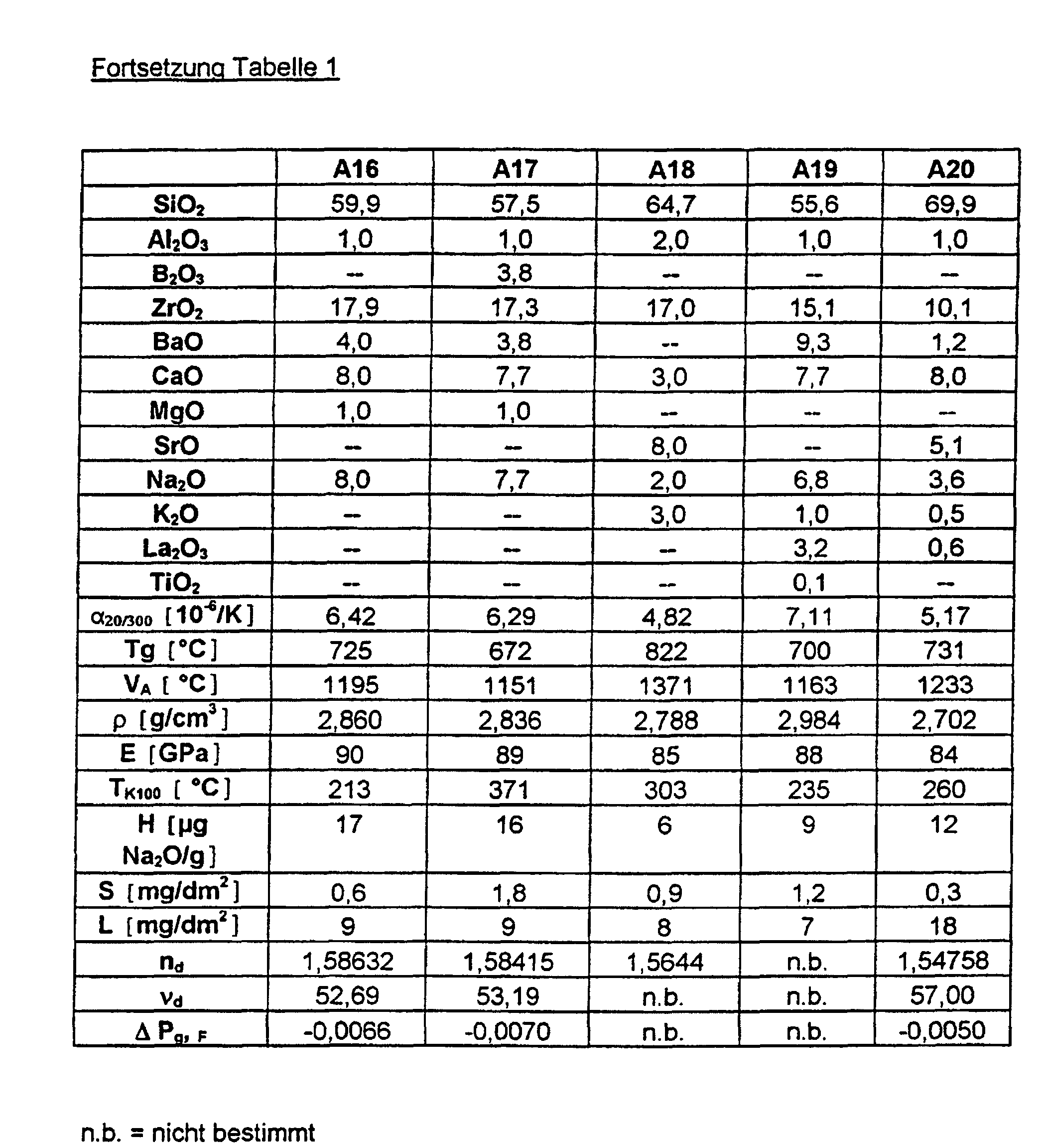

Die erfindungsgemäßen Gläser weisen hohe chemische Beständigkeiten auf:

Bei der Bestimmung der hydrolytischen Beständigkeit H nach DIN/ISO 719, bei der das Basenäquivalent des Säureverbrauchs als µg Na₂O /g Glasgrieß angege-Klasse 1 ("chemisch hochresistentes Glas"). Dies ist für die erfindungsgemäßen Gläser erfüllt.

Bei der Bestimmung der Laugenbeständigkeit nach ISO 695 (=DIN 52322) bedeutet ein Gewichtsverlust bis 75 mg/dm² die Zugehörigkeit zur Laugenklasse 1 ("schwach laugenlöslich"), was für die erfindungsgemäßen Gläser erfüllt ist.

Bei der Bestimmung der Säurebeständigkeit S nach DIN 12116 bedeutet ein Gewichtsverlust bis 0,7 mg/dm² die Zugehörigkeit zu Säureklasse 1 ("säurebeständig"), über 0,7 bis 1,5 mg/dm² zur Säureklasse 2 ("schwach säurelöslich") und über 1,5 bis 15 mg/dm² zur Säureklasse 3 ("mäßig säurelöslich"). Die erfindungsgemäßen Gläser gehören der Säureklasse 3 oder besser an.

Damit stellen die Gläser, die der Säureklasse 1 angehören (s. beispielhaft die Gläser A6, A11, A12, A15, A16, A20), sogenannte 1-1-1 Gläser dar, d. h. sie gehören bei jedem der drei Aspekte der chemischen Beständigkeit der Klasse 1 an.

Die Gläser sind sehr gut geeignet als Behälterglas, speziell für chemisch aggressive Substanzen, insbesondere Flüssigkeiten.

Die erfindungsgemäßen Gläser besitzen hohe Transformationstemperaturen T_{g} von wenigstens 640 °C. Damit sind sie für Verwendungen geeignet, bei denen thermisch hoch belastbare Gläser benötigt werden, beispielsweise auch als Komponenten für hochtemperaturbelastete Teile in Abgassystemen mit Katalysatoren. Aufgrund ihrer mit einer hohen Transformationstemperatur einhergehenden geringen Compaction sind die Gläser auch gut für die Verwendung als Substratgläser in der Displaytechnik geeignet.

Die erfindungsgemäßen Gläser besitzen thermische Ausdehnungskoeffizienten α_{20/300} zwischen 4,1 x 10⁻⁶/K und 8,0 x 10⁻⁶/K und sind damit mit Wolfram und Molybdän verschmelzbar und gut als Einschmelzglas für diese Metalle geeignet. Die Gläser sind durch lonenaustausch chemisch vorspannbar, wodurch sie auch für Anwendungen, bei denen eine erhöhte Bruchfestigkeit wichtig ist, z. B. als Substrate für EDV-Speichermedien, gut geeignet sind.

Die erfindungsgemäßen Gläser lassen sich gut zu Glasfasern verarbeiten. Aufgrund der guten chemischen Beständigkeit der Gläser, die eine erhöhte Langzeitbeständigkeit bewirkt, sind diese Glasfasern hervorragend geeignet zur Verstärkung von Betonbauteilen. Sowohl der Einsatz als Kurzfaser wie auch als Endlosfaser (Herstellung von Beton-Glasfaser-Kompositen) ist möglich.

Die Gläser weisen gute Verarbeitungseigenschaften auf. So sind sie z.B. zu Blöcken, Platten, Stangen, Röhren und Fasern verarbeitbar und je nach Verwendungszweck auch in diesen Formen einsetzbar.

Die optischen Daten der Gläser, nämlich ein Brechwert n_{d} zwischen 1,53 und 1,63, eine Abbezahl v_{d} zwischen 47 und 66 und insbesondere eine negative Abweichung der Teildispersion von der Normalgeraden (= negative anomale Teildispersion) im blauen Spektralbereich Δ P_{g,F} bis - 0,0130 machen sie auch für optische Anwendungen, z. B. für Gläser zur Korrektur chromatischer Abbildungsfehler, interessant.

Es ist überraschend, daß die Gläser neben den beschriebenen guten Eigenschaften hinsichtlich thermischer, mechanischer und chemischer Kenngrößen auch sehr interessante optische Eigenschaften, insbesondere eine negative anomale Teildispersion in blauen Spektralbereich (Δ P_{g,F}) aufweisen. Hier ist bisher nur bekannt gewesen, daß diese Eigenschaft in Kombination mit relativ niedrigen Abbezahlen (Gläser vom Flinttyp ν_{d} < ca. 55) durch PbO, Nb₂O₅ und Ta₂O₅ verursacht wird. Bei Gläsern mit hoher Abbezahl (Krontyp ν_{d} > ca. 55) kann diese Eigenschaft auch durch die Erdalkalioxide MgO - BaO und Seltenerdelemente La₂O₃, Gd₂O₃, Yb₂O₃, Lu₂O₃ usw. verursacht werden, oft in Kombination mit dem Glasbildner B₂O₃.

Hier liegen nun erstmalig Gläser mit negativem Δ P_{g,F} mit niedrigen bis mittleren Abbezahlen vor, die relativ niedrige Konzentrationen an Erdalkalioxiden, B₂O₃ und ggf. La₂O₃ als Seltenerdoxid aufweisen und frei von den teuren Komponenten Nb₂O₅ und Ta₂O₅ sind.

## Patentansprüche

1. Hochzirconiumoxidhaltiges Glas,
**gekennzeichnet durch**
eine Zusammensetzung (in Gew.-% auf Oxidbasis) von
| | |
|---|---|
| SiO₂ | 54 - 72 |
| Al₂O₃ | 0,5 - 7 |
| ZrO₂ | >10 - <18 |
| B₂O₃ | 0 - <5 |
| Na₂O | 2 - <10 |
| K₂O | 0-5 |
| mit Na₂O + K₂O | 2 - <10 |
| CaO | 3-11 |
| MgO | 0-10 |
| SrO | 0-8 |
| BaO | 0-12 |
| mit CaO + MgO + SrO + BaO | >5- 24 |
| La₂O₃ | 0-6 |
| TiO₂ | 0-4 |
+ ggf. übliche Läutermittel in üblichen Mengen

2. Glas nach Anspruch 1,
**gekennzeichnet durch**
eine Zusammensetzung (in Gew.-% auf Oxidbasis) von
| | |
|---|---|
| SiO₂ | 54 - 72 |
| Al₂O₃ | 0,5 - 7 |
| ZrO₂ | >10 - <12 |
| B₂O₃ | 0 - 4 |
| Na₂O | 3 - <10 |
| K₂O | 0-5 |
| mit Na₂O + K₂O | 3 - <10 |
| CaO | 3 - 10 |
| MgO | 0-10 |
| SrO | 0-8 |
| BaO | 0-10 |
| mit CaO + MgO + SrO + BaO | >5- 23 |
| La₂O₃ | 0-5 |
| TiO₂ | 0-4 |
+ ggf. übliche Läutermittel in üblichen Mengen

3. Glas nach Anspruch 1 oder 2,
**gekennzeichnet durch**
eine Zusammensetzung (in Gew.-% auf Oxidbasis) von
| | |
|---|---|
| SiO₂ | 58 -71 |
| Al₂O₃ | 0,5 - <2,3 |
| ZrO₂ | > 10 - <18 |
| Na₂O | 2 - 9 |
| K₂O | 0-3 |
| mit Na₂O + K₂O | 2 - <10 |
| CaO | 3 - 11 |
| MgO | 0 - 2,6 |
| SrO | 0-6 |
| BaO | 0 - 9 |
| mit CaO + MgO + SrO + BaO | > 5 - 24 |
| La₂O₃ | 0 - 1 |
+ggf. übliche Läutermittel in üblichen Mengen

4. Glas nach wenigstens einem der Ansprüche 1 bis 3
mit einer hydrolytischen Beständigkeit H der hydrolytischen Klasse 1, einer Säurebeständigkeit S der Säureklasse 3 oder besser, einer Laugenbeständigkeit L der Laugenklasse 1, einer Transformationstemperatur T_{g} von wenigstens 640°C und einem thermischen Ausdehnungskoeffizienten α_{20/300} zwischen 4,1 x10⁻⁶ und 8,0 x10⁻⁶/K, einem Brechwert n_{d} zwischen 1,53 und 1,63, einer Abbezahl ν_{d} zwischen 47 und 66 und einer negativen Abweichung der Teildispersion von der Normalgeraden im blauen Spektralbereich Δ P_{g,F} bis -0,0130.

5. Glasfaser, bestehend aus einem Glas nach wenigstens einem der Ansprüche 1 bis 4.

6. Verwendung einer Glasfaser nach Anspruch 5 zur Betonverstärkung.

7. Verwendung eines Glases nach wenigstens einem der Ansprüche 1 bis 4 als Substratglas in der Displaytechnik.

8. Verwendung eines Glases nach wenigstens einem der Ansprüche 1 bis 4 für Wolfram- oder Molybdän-Einschmelzungen.

9. Verwendung eines Glases nach wenigstens einem der Ansprüche 1 bis 4 als Behälterglas für chemisch aggressive Flüssigkeiten.

10. Verwendung eines Glases nach wenigstens einem der Ansprüche 1 bis 4 als Glas für optische Anwendungen.

## Claims

1. Glass having a high zirconium oxide content, **characterized by** a composition (in % by weight, based on oxide) of
| | |
|---|---|
| SiO₂ | 54 - 72 |
| Al₂O₃ | 0.5 - 7 |
| ZrO₂ | >10 - <18 |
| B₂O₃ | 0 - <5 |
| Na₂O | 2 - <10 |
| K₂O | 0 - 5 |
| with Na₂O + K₂O | 2 - <10 |
| CaO | 3 - 11 |
| MgO | 0 - 10 |
| SrO | 0 - 8 |
| BaO | 0 - 12 |
| with CaO + MgO + SrO + BaO | >5 - 24 |
| La₂O₃ | 0 - 6 |
| TiO₂ | 0 - 4 |
+ optionally conventional fining agents in conventional amounts.

2. Glass according to Claim 1, **characterized by** a composition (in % by weight, based on oxide) of
| | |
|---|---|
| SiO₂ | 54 - 72 |
| Al₂O₃ | 0.5 - 7 |
| ZrO₂ | >10 - <12 |
| B₂O₃ | 0 - 4 |
| Na₂O | 3 - <10 |
| K₂O | 0 - 5 |
| with Na₂O + K₂O | 3 - <10 |
| CaO | 3 - 10 |
| MgO | 0 - 10 |
| SrO | 0 - 8 |
| BaO | 0 - 10 |
| with CaO + MgO + SrO + BaO | >5 - 23 |
| La₂O₃ | 0 - 5 |
| TiO₂ | 0 - 4 |
+ optionally conventional fining agents in conventional amounts.

3. Glass according to Claim 1 or 2, **characterized by** a composition (in % by weight, based on oxide) of
| | |
|---|---|
| SiO₂ | 58 - 71 |
| Al₂O₃ | 0.5 - <2.3 |
| ZrO₂ | >10 - <18 |
| Na₂O | 2 - 9 |
| K₂O | 0 - 3 |
| with Na₂O + K₂O | 2 - <10 |
| CaO | 3 - 11 |
| MgO | 0 - 2.6 |
| SrO | 0 - 6 |
| BaO | 0 - 9 |
| with CaO + MgO + SrO + BaO | >5 - 24 |
| La₂O₃ | 0 - 1 |
+ optionally conventional fining agents in conventional amounts.

4. Glass according to at least one of Claims 1 to 3, having a hydrolytic resistance H in hydrolytic class 1, an acid resistance S in acid class 3 or better, a caustic lye resistance L in lye class 1, a glass transition temperature T_{g} of at least 640°C and a coefficient of thermal expansion α_{20/300} of from 4.1 x 10⁻⁶ to 8.0 x 10⁻⁶/K, a refractive index n_{d} of from 1.53 to 1.63, an Abbe number ν_{d} of from 47 to 66 and a negative anomalous partial dispersion in the blue spectral region Δ P_{g,F} of up to -0.0130.

5. Glass fibre consisting of a glass according to at least one of Claims 1 to 4.

6. Use of a glass fibre according to Claim 5 for the reinforcement of concrete.

7. Use of a glass according to at least one of Claims 1 to 4 as substrate glass in display technology.

8. Use of a glass according to at least one of Claims 1 to 4 for fusing to tungsten or molybdenum.

9. Use of a glass according to at least one of Claims 1 to 4 as container glass for chemically aggressive liquids.

10. Use of a glass according to at least one of Claims 1 to 4 as glass for optical applications.

## Revendications

1. Verre à haute teneur en oxyde de zirconium, **caractérisé par** une composition (en % en poids sur base des oxydes) de
| | |
|---|---|
| SiO₂ | 54-72 |
| Al₂O₃ | 0,5-7 |
| ZrO₂ | >10-<18 |
| B₂O₃ | 0-<5 |
| Na₂O | 2-<10 |
| K₂O | 0-5 |
| avec Na₂O + K₂O | 2-<10 |
| CaO | 3-11 |
| MgO | 0-10 |
| SrO | 0-8 |
| BaO | 0-12 |
| avec CaO+MgO+SrO+BaO | >5-24 |
| La₂O₃ | 0-6 |
| TiO₂ | 0-4 |
+ éventuellement agents d'affinage usuels en quantités habituelles.

2. Verre suivant la revendication 1, **caractérisé par** une composition (en % en poids sur base des oxydes) de
| | | |
|---|---|---|
| SiO₂ | 54-72 | |
| Al₂O₃ | 0,5-7 | |
| ZrO₂ | >10-<12 | |
| B₂O₃ | 0-4 | |
| Na₂O | 3-<10 | |
| K₂O | 0-5 | |
| avec Na₂O + K₂O | 3-<10 | |
| CaO | 3-10 | |
| MgO | 0-10 | |
| SrO | 0-8 | |
| BaO | 0-10 | |
| avec CaO+MgO+SrO+BaO | >5-23 | |
| La₂O₃ | 0-5 | |
| TiO₂ | 0-4 | |
+ éventuellement agents d'affinage usuels en quantités habituelles.

3. Verre suivant la revendication 1 ou 2, **caractérisé par** une composition (en % en poids sur base des oxydes) de
| | |
|---|---|
| SiO₂ | 58-71 |
| Al₂O₃ | 0,5-<2,3 |
| ZrO₂ | >10-<18 |
| Na₂O | 2-9 |
| K₂O | 0-3 |
| avec Na₂O + K₂O | 2-<10 |
| CaO | 3-11 |
| MgO | 0-2,6 |
| SrO | 0-6 |
| BaO | 0-9 |
| avec CaO+MgO+SrO+BaO | >5-24 |
| La₂O₃ | 0-1 |
+ éventuellement agents d'affinage usuels en quantités habituelles.

4. Verre suivant au moins l'une des revendications 1 à 3, avec une résistance à l'hydrolyse H de la classe hydrolytique 1, une résistance aux acides S de la classe des acides 3 ou supérieure, une résistance aux lessives L de la classe des lessives 1, une température de transformation T_{g} d'au moins 640°C et un coefficient de dilatation thermique α_{20/300} compris entre 4,1x10⁻⁶ et 8,0x10⁻⁶/K, un indice de réfraction n_{d} compris entre 1,53 et 1,63, un nombre d'Abbe ν_{d} compris entre 47 et 66 et un écart négatif de la dispersion partielle par rapport à la normale dans le domaine spectral bleu Δ P_{g,F} jusqu'à -0,0130.

5. Fibre de verre, se composant d'un verre suivant au moins l'une des revendications 1 à 4.

6. Utilisation d'une fibre de verre suivant la revendication 5 pour le renforcement du béton.

7. Utilisation d'un verre suivant au moins l'une des revendications 1 à 4 comme substrat de verre dans la technique de l'affichage.

8. Utilisation d'un verre suivant au moins l'une des revendications 1 à 4 pour des scellements de tungstène ou de molybdène.

9. Utilisation d'un verre suivant au moins l'une des revendications 1 à 4 comme verre de récipients pour des liquides chimiques agressifs.

10. Utilisation d'un verre suivant au moins l'une des revendications 1 à 4 comme verre pour des applications optiques.
